# FASCICULE DE BREVET EUROPEEN

(11) **EP 1 712 511 B1**
(45) Date de publication et mention de la délivrance du brevet: **19.03.2008**
(21) Numéro de dépôt: 05701680.0
(22) Date de dépôt: 21.01.2005
(51) Int. Cl.: B66B 7/02

(54) **SYSTEME D'ASSEMBLAGE/DE MONTAGE RAPIDE POUR GUIDES D'ASCENSEUR**
SCHNELLKUPPLUNGS-/-MONTAGESYSTEM FÜR AUFZUGSFÜHRUNGEN
QUICK-COUPLING/MOUNTING SYSTEM FOR ELEVATOR GUIDES

(30) Priorité: 26.01.2004 ES 200400162; 27.01.2004 ES 200400169; 29.10.2004 ES 200402613
(43) Date de publication de la demande: 18.10.2006
(73) Titulaire: S.A. de Vera ( Savera), 31780 Vera de Bidasoa (ES)
(72) Inventeur: SANZ GAMBOA, Jesus, E-31780 Vera de Bidasoa (ES)
(74) Mandataire: Urizar Barandiaran, Miguel Angel
(86) Numéro de dépôt international: PCT/ES2005/000025
(87) Numéro de publication internationale: WO 2005/070805

(56) Documents cités:
- WO-A1-01/47796
- PATENT ABSTRACTS OF JAPAN vol. 1997, no. 07 31 July 1997 & JP 09 086 825 A (TOSHIBA ELEVATOR TECHNOS K.K.) 31 March 1997

## Description

La présente invention a pour trait un système d'assemblage à montage rapide pour guides d'ascenseur.

Les guides d'ascenseurs exigent, jour après jour, de plus grands indices de qualité et de précision, essentiellement du fait des exigences de confort des usagers. Les assemblages entre ces guides doivent être exécutés en tenant compte de ces exigences de qualité et de précision.

Un assemblage de guides se compose de trois éléments essentiels:
a) les guides eux-mêmes
b) la plaque d'assemblage des guides entre eux,
c) des vis d'assemblage des guides avec la plaque d'assemblage.

Tous les systèmes d'assemblages connus souffrent de deux problèmes :
a) ces trois éléments essentiels se présentent indépendamment lors du montage.
b) l'alignement des guides et de la plaque d'assemblage entre eux est compliqué en soi et la difficulté augmente si l'on tient compte du fait qu'il doit se faire dans des endroits difficilement accessibles et dans des positions compliquées.

Tout cela fait que, dans un système conventionnel d'assemblage de guides, la durée des opérations d'accouplement des trois éléments essentiels, alignement et amarrage/fixation entre eux, est habituellement de l'ordre de 9 minutes. Un exemple d'un tel système est donné dans le document WO 0147796A1.

On peut parfaitement comprendre que toute amélioration visant la simplification du montage suppose un grand progrès dans ce domaine technologique et une plus grande rapidité du montage lui-même sans détriment de la qualité et de la précision exigées.

Le demandeur s'est aperçu que, dans les systèmes d'assemblage connus, la plaque qu'assemblage et les ailes des guides sont assemblées verticalement.

Le demandeur a résolu les problèmes mentionnés en disposant que:
a) la plaque d'assemblage se divise en deux parties de plaque, dont les vis/moyens d'assemblage sont déjà montés ;
b) on dote les ailes et les parties de plaque de configurations d'alignement conjuguées, de sorte que leur emboîtement mutuel et l'alignement correspondant sont d'une extrême rapidité.

La plaque d'assemblage et les ailes des guides sont assemblées/serrées horizontalement (latéralement).

Grâce au système de l'invention, la durée des opérations accouplement/alignement/amarrage est de 20 secondes.

Plus concrètement, le système d'assemblage/montage rapide pour guides d'ascenseur, chaque guide comprenant une âme-champignon où l'on a effectué une finition de précision sur sa surface supérieure de référence (axe OX) et une finition de précision sur ses surfaces latérales de référence (axe OY) et une aile de chaque côté ; il se caractérise par le fait que :
a) on détermine sur chaque aile de chaque guide au moins un point d'assemblage, situé à une hauteur fixe prédéterminée par rapport à la surface supérieure de référence du champignon et à une distance fixe prédéterminée par rapport à la surface latérale correspondante de référence du champignon;
b) on dispose sur les ailes, autour de chaque point d'assemblage, une zone usinée ouverte à l'extérieur;
c) on dispose des plaques d'assemblage, chacune d'entre elles s'étendant entre les ailes de chaque côté d'au moins deux guides. La plaque d'assemblage est structurée en deux parties de plaque qui sont en rapport avec les ailes de chaque côté et qui peuvent être déplacées par des moyens de serrage montés sur ces parties de plaque qui, en se rapprochant entre elles, serrent latéralement ces parties contre les ailes;
d) on dispose, pour chaque partie de plaque, d'éléments d'alignement, qui, étant centrés et conjugués, sont en rapport avec les zones usinées entre les points d'assemblage des ailes, de sorte que, lorsque les parties de plaque sont serrées contre les ailes, les points d'assemblage des ailes de chaque côté des guides demeurent en ligne droite.

Pour mieux comprendre l'objet de la présente invention, on a représenté sur les plans une forme préférentielle de réalisation pratique, susceptible de changements accessoires qui n'en dénaturent pas le fondement.
Les figures 1a et 1b représentent, chacune d'elles, des vues générales en perspective frontale -figure 1 a- et postérieure -figure 1 bd'une réalisation pratique du système qui fait l'objet de l'invention.
La figure 2 représente une vue en plan correspondant à la figure précédente.
La figure 3a représente une vue en perspective d'une pièce-montant (2a) ) (partie de plaque) pour la réalisation des figures 1 et 2 (profil en "U").
La figure 3b représente une vue en perspective d'une pièce-montant (2a) (partie de plaque) pour la réalisation des figures 1 et 2, pour une réalisation alternative (pièce massive).
La figure 4 représente une vue partielle en perspective des figures 1 et 2 d'un guide (1), avec une solution de mortaises/sièges (141) (zone usinée ouverte) avec usinage dans les ailes (14).
Les figures 5a et 5b représentent chacune une vue générale en perspective frontale -figure 5a- et postérieure -figure 5b- d'une autre réalisation pratique du système qui fait l'objet de l'invention où les zones usinées ouvertes (141) des guides à assembler (1) sont des mortaises ouvertes passantes et la plaque d'assemblage (2) est constituée par deux pièces-montants (2a) liées entre elles par les moyens de serrage, dans ce cas, par deux jeux de goujon (21)/écrou (22).

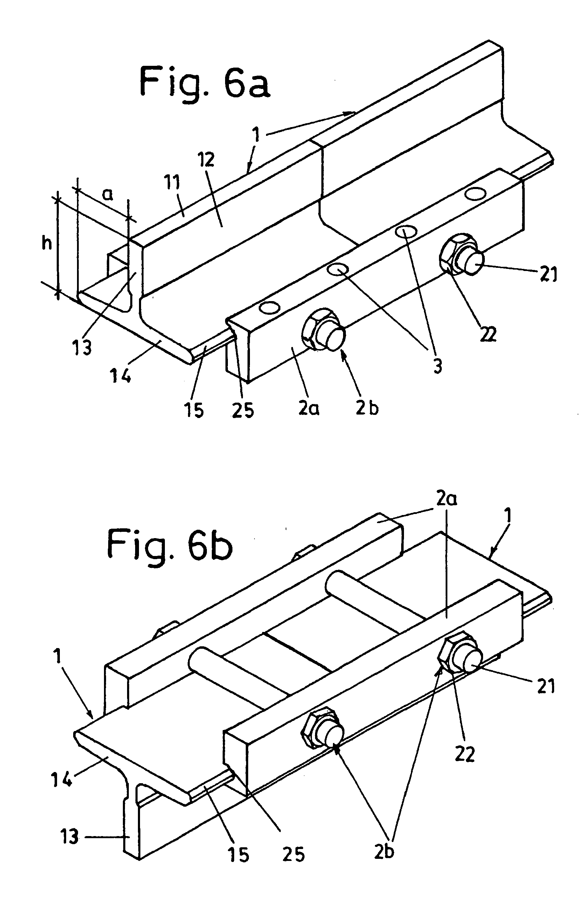

Les figures 6a et 6b représentent, chacune d'entre elles, une vue générale en perspective, l'une frontale et l'autres postérieure d'uen autre réalisation pratique du fait qui fait l'objet de l'invention où les parties usinées ouvertes (cachées) des guides à assembler (1) sont des mortaises ouvertes espacées et reliées entre elles par des chanfreins continus (15). Ces chanfreins (15) sont doubles et la plaque d'assemblage (2) est constituée par deux pièces-montants (2a) (parties de plaque) massives reliées entre elles par deux jeux de goujon (21)/écrou (22) (moyens de serrage) et avec une mortaise longitudinale (25).
La figure 7 représente une vue générale en perspective frontale d'une autre réalisation pratique du système qui fait l'objet de l'invention où les parties usinées (141) des guides à assembler (1) sont des mortaises ouvertes et les éléments d'alignement (241) sont des joues estampées et intégrées dans les pièces-montants (2a).
La figure 8 est une représentation schématique de l'assemblage avec un minimum de points d'assemblages (P) reliés entre eux, autrement dit, un point d'assemblage (P) par aile.

On décrit ci-dessous un exemple de réalisation pratique, non limitative, de la présente invention.

Le système d'assemblage/montage rapide pour guides d'ascenseur, qui fait l'objet de l'invention est employé dans les guides (1) qui comprennent une âme-champignon (13) et une aile (14) de chaque côté.

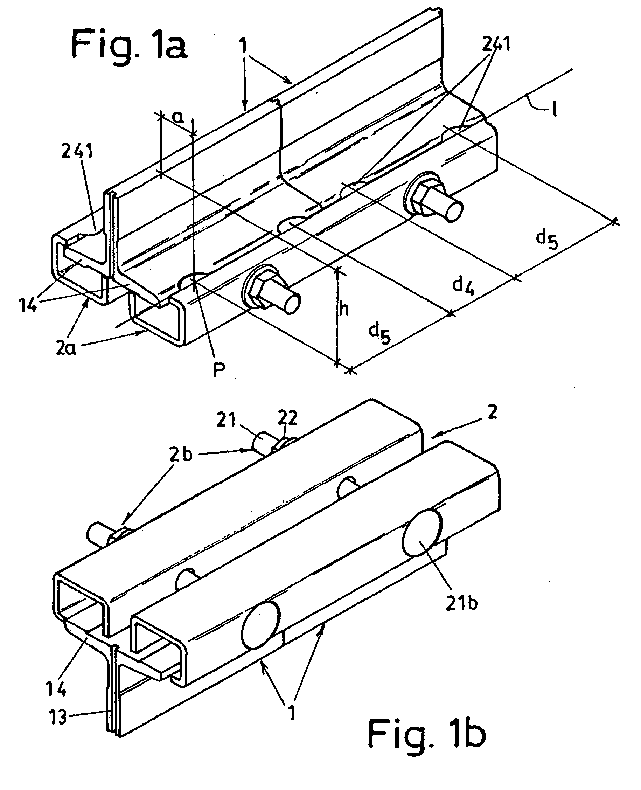

Selon ce système:
- L'âme-champignon (13) de chaque guide comporte une finition de précision sur sa surface supérieure (11) -surface supérieure de référence suivant l'axe OX- et une finition de précision sur ses surfaces latérales (12) -surfaces latérales de référence suivant l'axe OY-.
- On détermine sur chaque aile (14) de chaque guide (1) plusieurs points d'assemblage (P) situés à une hauteur (h) fixe prédéterminée, par rapport à la surface supérieure de référence (11) et à une distance (a) fixe prédéterminée par rapport à la surface latérale correspondante de référence (12) (formant la droite I).
- On dispose une plaque d'assemblage (2) qui s'étend entre les points d'assemblage (P) mentionnés des ailes (14) de chaque côté d'au moins deux guides (1) disposés l'un après l'autre.
- On dispose sur la plaque d'assemblage (2) des éléments d'alignement (241) conjugués avec des zones usinées ouvertes (141) aux points d'assemblage (P) sur les ailes (14).
- Chaque aile (14) constitue à l'origine des zones usinées (141); ces zones usinées (141) étant disposées par paires placées face à face (une sur chaque aile) sur les points d'assemblage (P) : une paire ou plusieurs espacées entre elles d'une distance quelle qu'elle soit (d₁), la dernière des paires étant usinées à une distance quelconque (d₂) de l'extrémité du guide (1).
- La surface supérieure (11) et les surfaces latérales (12) du champignon (13) servent de référence pour effectuer à l'origine le positionnement des zones usinées (141). Leurs centres coïncident avec les points d'assemblage (P), à une distance fixe (h) de la surface supérieure de référence (11) du champignon (13) suivant l'axe OY et à une distance fixe (a) des surfaces latérales de référence (12) du champignon (13) suivant l'axe OX. Grâce a tout cela, on obtient un temps de montage très inférieur à celui qui est connu actuellement et un alignement automatique sur les axes OX, OY au moyen des zones usinées ouvertes vers l'extérieur (141) sur les ailes (14).
- La plaque d'assemblage (2) (figures 1 à 4) est structurée en deux parties de plaque (2a) (pièces-montant) avec des moyens de serrage (2b) pour les rapprocher/séparer entre elles, qui constituent à l'origine des proéminences (241) disposées en paires situées face à face: au moins deux paires espacées entre elles d'une distance (d₄). Ces proéminences (241) constituent les moyens d'alignement intégrés sur la plaque d'assemblage (2).

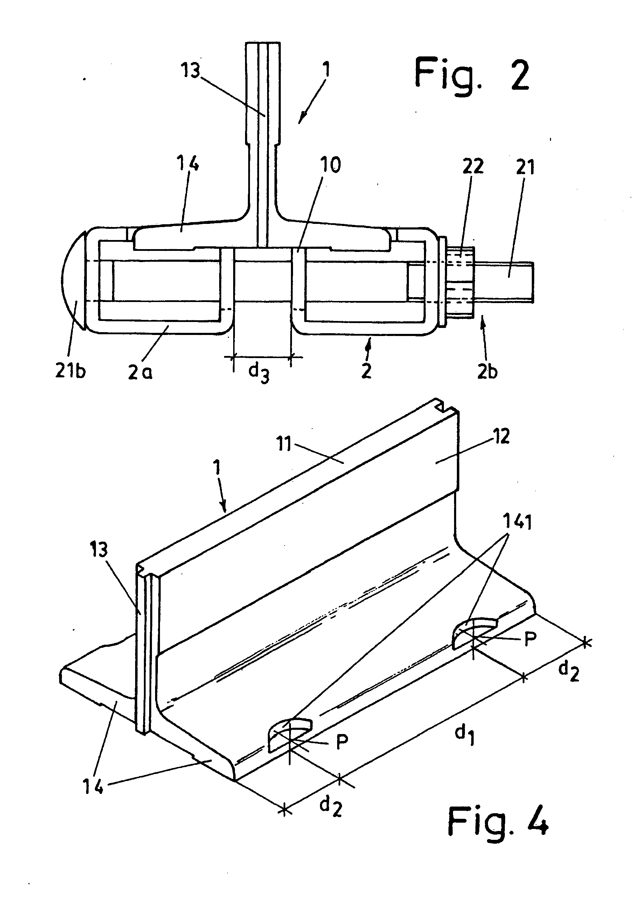

Les zones usinées ouvertes (141) façonnées sur les ailes (14) des guides (1) à assembler sont des mortaises ouvertes vers l'extérieur -voir figure 4-. Ces zones usinées ouvertes (141) sont espacées entre elles d'une distance (d₁) et se trouvent à une distance (d₂) de l'extrémité du guide (1) correspondant à assembler).

Ces distances (d₁), (d₂) qui, en principe, peuvent avoir une valeur quelconque, conditionnent les distances de la plaque d'assemblage (2) qui seront définies ci-dessous.

Dans l'exemple de réalisation représenté, les moyens de serrage (2b) pour rapprocher/séparer entre elles les pièces-montants (2a) sont toutes les deux des pièces-traverses.

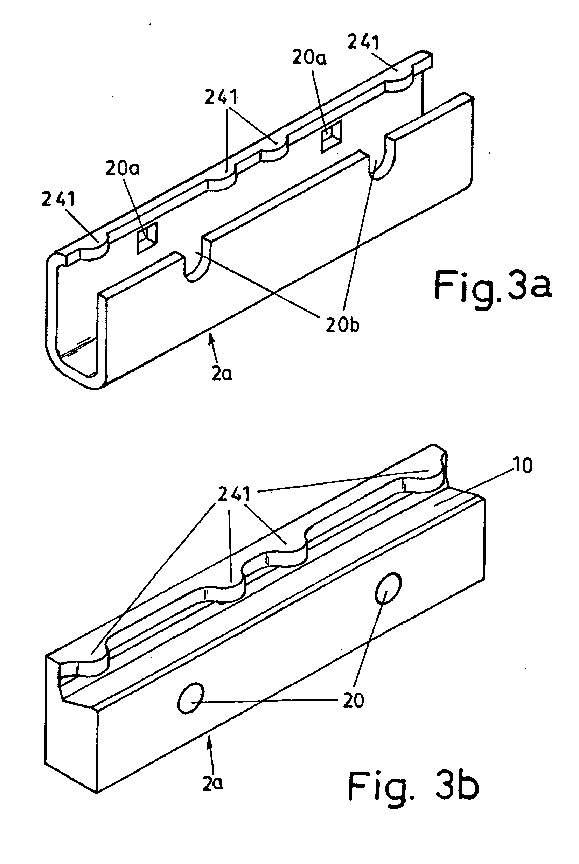

Pour une première variante de cet exemple de réalisation, - voir figure 3a- chaque pièce-montant (2a) est un profilé allongé en "U" à ailes asymétriques, qui forme sur les deux ailes des paires de conformations (20) -orifice antirotation (20a) et mortaise ouverte (20b) situées face à face par paires- et qui forme, sur l'une d'entre elles, un coudage distal, avec une pluralité de proéminences (241) (éléments d'alignement) situées face à face par paires centrées et dimensionnellement conjuguées avec les mortaises/sièges (141) (zones usinées ouvertes).

Pour une seconde variante de cet exemple de réalisation - voir figure 3b-, chaque pièce-montant (2a) est massive avec deux orifices (20) dans son corps, d'où se prolonge une paroi qui donne une conformation coudées aux proéminences (241).

Dans l'exemple de réalisation représenté, on a usiné des paires de proéminences (241) sur les pièces-montants (2a). Les deux paires intérieures sont usinées à une distance (d₄) l'une de l'autre et les deux paires extérieures sont usinées à une distance (d₅) l'une de l'autre -voir figure 1 a-.

II faut que d₄ = 2d₂ et d₅ = d₁ -voir figures 1 a et 4-.

Les moyens de serrage (2b) se composent d'un jeu de goujon (21)/ écrou (22) qui s'insère dans une paire de conformations (20) situées face à face. L'amplitude maximale (d₃) d'écart entre les pièces-montants (2a) est limitée par la tête (21 b) du goujon (21) et par l'écrou (22) lui-même, et varie en fonction de la largeur des guides (1) à assembler. C'est pourquoi, selon l'invention, une même plaque d'assemblage (2) est applicable à l'assemblage de paires de guides (1) de différentes largeurs (il est sous-entendu que, dans chaque assemblage, les guides (1) sont égaux entre eux).

La rétention a lieu en embrassant les ailes (14) des guides (1) à assembler entre ces éléments d'alignement (proéminences) (241), en les insérant dans les mortaises/sièges (zones usinées ouvertes) (141) et en serrant les écrous (22) des jeux de goujon (21)/écrou (22), qui constituent les moyens de serrage (2b). En serrant, il y a un moment de rotation qui fait que les guides (1) prennent appui sur les proéminences (241) et sur les sièges (10) des pièces-montants (2a).

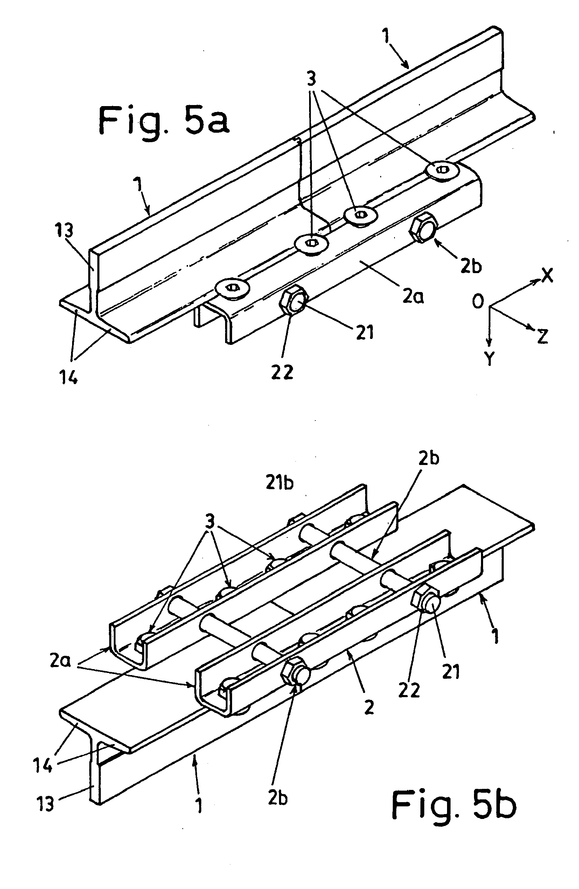

Avec les réalisations des figures 5a, 5b, 6a et 6b, les éléments d'alignement (3) sont pré-montés sur la plaque d'assemblage (2).

Les zones usinées ouvertes (141) situées sur les rebords des ailes (14) des guides (1) à assembler sont des mortaises ouvertes passantes.

Dans l'exemple de réalisation, conformément aux figures 6a et 6b, la structure de la plaque d'assemblage (2) se compose de parties de plaque (2a) et de moyens de serrage (2b) ayant une forme et une disposition similaires à celles déjà décrites, avec la particularité que les parties de la plaque (2a) comprennent des zones usinées (25) qui sont des guides longitudinaux en "V" et les moyens d'alignement (3) pré-montés sont des pitons insérés dans ces pièces-montants (parties de plaque) (2a) de façon à interrompre la continuité de ces guides longitudinaux (25) à des distances (d₄), (d₅) également semblables à celles déjà décrites.

Les zones usinées ouvertes (141) façonnées sur les ailes (14) des guides (1) à assembler sont des mortaises ouvertes reliées entre elles par des chanfreins continus (15), qui occupent, au moins, la longueur des ailes (14) en contact avec la plaque d'assemblage (2). Ces chanfreins (15) peuvent être simples ou doubles -comme sur les figures 6a et 6b- sans pour cela altérer l'essence de l'invention, car cela n'exige que de la variation, de façon conjuguée, de la géométrie des guides en "V" (25).

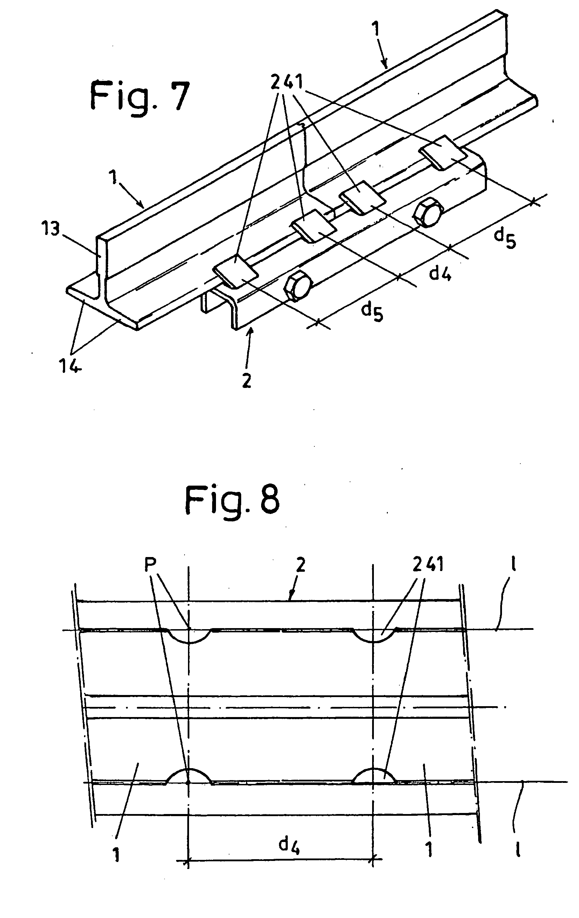

Dans l'exemple de réalisation -conformément à la figure 7-les zones usinées ouvertes (141) sur les points d'assemblage (P) façonnés sur les rebords des ailes (14) des guides (1) à assembler sont des mortaises passantes.

Chaque pièce-montant (partie de plaque) (2a) est un profilé allongé en "U" qui forme sur ses ailes des paires d'orifices (20) situés face à face par paires et, sur son âme, une pluralité de joues estampées (241) alignées (éléments d'alignement) également situées face à face par paires.

Sur la figure 8, on peut voir, de façon schématique, la réalisation la plus simple, autrement dit un point d'assemblage (P) pour chaque aile (14) de chaque guide (1), alignés de chaque côté en formant des droites (I).

## Revendications

1. Système d'assemblage/montage rapide pour guides d'ascenseur, chaque guide (1) comprenant une âme-champignon (13), où l'on a pratiqué une finition de précision sur sa surface supérieure de référence (11) (axe OX) et une finition de précision sur ses surfaces latérales de référence (12) (axe OY) et une aile (14) de chaque côté, **se caractérisant par le fait que** :
a) on détermine sur chaque aile (14) de chaque guide (1), au moins un point d'assemblage (P), situé à une hauteur (h) fixe prédéterminée par rapport à la surface supérieure de référence (11) du champignon (13) et à une distance (a) fixe prédéterminée par rapport à sa surface latérale respective de référence (12) du champignon (13);
b) on dispose sur les ailes (14), autour de chaque point d'assemblage (P), une zone usinée (141) ouverte à l'extérieure ;
c) on dispose des plaques d'assemblage (2), chacune d'entre elles s'étendant entre les ailes(14), de chaque côté d'au moins deux guides (1). Cette plaque d'assemblage (2) est structurée en deux parties de plaque (2a) qui sont placées en face des ailes (14) de chaque côté et qui peuvent se déplacer sur des moyens de serrage (2b), (21), (22) montés sur ces parties de plaque (2a) qui, en les rapprochant l'une de l'autre, serrent latéralement cette partie de plaque (2a) contre les ailes (14);
d) on dispose, sur chaque partie de plaque (2a), d'éléments d'alignement (3), (241) qui sont centrés et conjugués avec les zones usinées (141) aux points d'assemblage (P) des ailes (14), de sorte que lorsque les parties de plaque (2a) sont serrées contre les ailes (14), tous les points d'assemblage (P) des ailes (14) demeurent alignés de chaque côté des guides (1).

2. - Système d'assemblage/montage rapide pour guides d'ascenseur, selon revendication antérieure, **se caractérisant par le fait que** :
a) chaque aile (14) forme, à l'origine, des zones usinées ouvertes (141), qui sont disposées face à face par paires : une paire ou plusieurs espacées entre elles d'une distance quelle qu'elle soit (d₁), la dernière des paires étant usinée à une distance quelconque (d₂) de l'extrémité du guide (1);
b) la surface supérieure (11) et les surfaces latérales (12) du champignon (13) servent de référence pour effectuer, à l'origine, le positionnement des zones usinées ouvertes (141), leurs centres étant les point d'assemblage (P);
c) on dispose une plaque d'assemblage (2) structurée en deux parties de plaque (2a), avec des moyens de serrage (2b) pour les rapprocher/séparer entre elles jusqu'à une distance maximale (d₃), et qui forment, à l'origine, des éléments d'alignement (241) distribués en, au moins, deux paires espacées entre elles d'une distance (d₄); des éléments d'alignement (241) constituent les moyens de rétention qui, étant intégrés dans la plaque d'assemblage (2) et dépendant d'elle, la relient, d'une manière fixe et solidaire, aux ailes (14) de deux guides (1) à assembler ;
de sorte que, pour l'assemblage/montage rapide, il suffit de mettre face à face les zones usinées (141), (241) des guides (1) et de comprimer en les rapprochant les pièces/montants (2a) de cette plaque d'assemblage (2).

3. - Système d'assemblage/montage rapide pour guides d'ascenseur, selon revendication 2, **se caractérisant par le fait que** les éléments d'alignement (241) sont distribués en, au moins, quatre paires espacées entre elles, deux à deux, d'une distance (d₅).

4. - Système d'assemblage/montage rapide pour guides d'ascenseur, selon revendications 2 et 3, **se caractérisant par le fait que**, dans le rapport entre les distances (d₁), (d₂), (d₄), (d₅), on doit avoir :
d₄ = 2d₂ y d₅ = d₁

5. - Système d'assemblage/montage rapide pour guides d'ascenseur, selon les revendications antérieures, **se caractérisant par le fait que** chaque partie de plaque (2a) est un profilé allongé en "U" qui présente des ailes asymétriques, l'une d'entre elles étant coudée vers l'intérieur, et des paires de conformations (20) situées face à face, pour y loger les moyens de serrage (2b).

6. Système d'assemblage/montage rapide pour guides d'ascenseur, selon revendication 5, **se caractérisant par le fait que** les éléments d'alignement (241) mentionnés, qui constituent les moyens de rétention intégrés et dépendant de la palque-base (2) sont des proéminences dimensionnellement conjuguées des zones usinées ouvertes (141) et situées dans le coudage de l'une des ailes asymétriques de ces parties de plaque (2a).

7. - Système d'assemblage/montage rapide pour guides d'ascenseur, selon les revendications antérieures, **se caractérisant par le fait que** les moyens de serrage (2b) mentionnés sont des jeux de goujon (21) et écrou (22), logés dans des jeux de conformations (20) situés face à face dans les parties de plaque (2a), de sorte que la distance maximale (d₃) de séparation entre les parties de plaque (2a) soit délimitée, respectivement, par l'écrou (22) et la tête (21 b) du goujon (21).

8. - Système d'assemblage/montage rapide pour guides d'ascenseur, selon revendication 5, **se caractérisant par le fait que** ces conformations (20) sont, dans chaque jeu, un orifice antirotation (20a) et une mortaise ouverte (20b).

9. Système d'assemblage/montage rapide pour guides d'ascenseur, selon revendications 1 à 4, **se caractérisant par le fait que** les parties de plaque (2a) sont massives, avec une paroi prolongée, à l'extrémité de laquelle, on dispose, formant un coude, les éléments d'alignement (241).

10. - Système d'assemblage/montage rapide pour guides d'ascenseur, selon revendication 9, **se caractérisant par le fait que** ces conformations (20) sont des trous passants.

11. - Système d'assemblage/montage rapide pour guides d'ascenseur, selon revendication 1, **se caractérisant par le fait que** :
a) chaque aile (14) forme, à l'origine, des zones usinées, qui sont disposées par paires sitées face à face: une paire ou plusieurs, espacées entre elles, d'une distance quelle qu'elle soit (d₁), la dernière de ces paires étant usinée à une distance quelconque (d₂) de l'extrémité du guide (1) ;
b) la surface supérieure (11) et les surfaces latérales (12) du champignon (13) servent de référence pour effectuer, à l'origine, le positionnement des zones usinées ouvertes (141), les centres en étant les points d'assemblage (P) ;
c) on dispose une plaque d'assemblage (2) structurée en deux parties de plaque (2a), avec des moyens de serrage (2b), pour les rapprocher/séparer entre elles, jusqu'à une distance maximale (d₃) ;
d) on dispose des éléments d'alignement (3) pré-montés sur ces parties de plaque (2a) rapprochables, de sorte que pour l'assemblage / montage rapide, il suffit de mettre face à face les zones usinées ouvertes (141) des guides (1) avec les éléments d'alignement (3) pré-montés sur la plaque d'assemblage (2), en comprimant ensuite en les rapprochant les parties de plaque (2a) de cette plaque d'assemblage (2).

12. - Système d'assemblage/montage rapide pour guides d'ascenseur, selon revendication 11, **se caractérisant par le fait que** les parties de plaque (2a) sont massives et que les éléments d'alignement (3) sont des pitons insérés dans ces parties de plaque (2a) de façon à interrompre la continuité de guides longitudinaux (25) qui englobent des chanfreins continus (15) que relient entre elles les zones usinées ouvertes (141) des guides (1) à assembler.

13. Système d'assemblage/montage rapide pour guides d'ascenseur, selon revendications 1 à 4, **se caractérisant par le fait que** les éléments d'alignement (241) mentionnés sont des joues estampées sur l'âme de ces parties de plaque (2a).

14. - Système d'assemblage/montage rapide pour guides d'ascenseur, selon revendication 13, **se caractérisant par le fait que** les joues estampées (241) mentionnées sont façonnées dans l'âme des parties de la plaque (2a).

## Claims

1. Rapid connection/assembly system, for lift guides, where each guide (1) includes a head-core (13) where a precision finish has been carried out on its upper surface of reference (11) (OX-axis) and a precision finish on its side surfaces of reference (12) (OY-axis) and a flange 814) on each side; **characterised** because:
a) at least one connection point (P) is determined on each flange (14) of each guide (1), situated at a predetermined set height /h) with respect to the upper surface of reference (11) of the head 813) and at a predetermined set distance (a) with respect to the respective side surface of reference (12) of the head (13);
b) a machine finish (141) open to the outside is placed on the flanges (14) around each connection point (P);
c) some connection plates (2) are placed, each one of which extends between the flanges (14) of each side of at least two guides (1); this connection plate (2) is organised into two plate parts (2a) which match the flanges (14) of each side and which can be moved in some tightening means (2b), (21), (22) mounted on these plate parts (2a), which, when moved closer together, tighten these plate parts (2a) laterally against the flanges (14);
d) on each plate part (2a) there are alignment elements (3), (241) which centrally and in a combined way match the machined parts (141) on the connection points (P) of the flanges), so that when the plate parts (2a) are tightened against the flanges (14) all the connection points (P) of the flanges (14) of each side of the guides (1) remain in a straight line (I).

2. Rapid connection/assembly system, for lift guides, according to previous claim, **characterised** because:
a) each flange (14) forms some open machined parts (141) in origin; these machined parts are placed in opposing pairs: one or several pairs spaced out at any distance (d₁) the last of these pairs being machined at any distance (d₂) from the end of the guide (1);
b) the upper surface (11) and the side surfaces (12) of the head (13) are used as reference to position in origin the open machined parts (141), whose centres are the connection points (P);
c) a connection plate (2) is placed, organised into two plate parts (2a) with tightening means (2b) to bring them closer/separate them to a maximum distance (d₃), and which form some alignment elements (241) in origin, which are distributed into at least two pairs separated from each other by a distance (d₄); these alignment elements (241) form the retention means which, integrated into the actual connection plate (2) and dependent upon this, attach is securely and jointly to the flanges (14) of two guides (1) to be joined;
so that for the rapid connection/assembly, it is sufficient to place the machined parts (141) opposite each other, (241) of the guides (1) and compress longitudinal-parts (2a) of this connection plate (2) closer together.

3. Rapid connection/assembly system, for lift guides, according to claim 2, **characterised** because the alignment elements (241) are distributed into at least four pairs separated from each other, two by two by a distance (d₅).

4. Rapid connection/assembly system, for lift guides, according to claims 2 and 3, **characterised** because in the relationship between distances (d₁), (d₂), (d₄), (d₅) the following must be satisfied:
d₄ = 2d₂ y d₅ = d₁

5. Rapid connection/assembly system, for lift guides, according to previous claims, **characterised** because each plate part (2a) is an elongated "U"-shaped profile with asymmetrical flanges, one of them bent towards the interior, and couples of conformations (20) opposite each other, to house the tightening means (2b).

6. Rapid connection/assembly system, for lift guides, according to claim 5, **characterised** because these alignment elements (241), which form the integrated retaining means and dependent on the base plate (2) are protuberances that are dimensionally combined with the open machined parts (141) and forming the bend of one of the asymmetric flanges of these plate parts (2a).

7. Rapid connection/assembly system, for lift guides, according to previous claims, **characterised** because the aforementioned tightening means (2b) are sets of stud (21) and nut (22), housed in opposing conformation sets (20) on the plate parts (2a) so that the maximum separation distance (d₃) between plate parts (2a) is delimited, respectively, by the nut (22) and the head (21 b) of the stud (21).

8. Rapid connection/assembly system, for lift guides, according to claim 5, **characterised** because these conformations (20) are, in each set, an anti-rotation opening (20a) and an open box (20b).

9. Rapid connection/assembly system, for lift guides, according to claims 1 to 4, **characterised** because the plate parts (2a) are solid, with an extension wall on whose end the alignment elements (241) are placed forming a bend.

10. Rapid connection/assembly system, for lift guides, according to claim 9, **characterised** because these conformations (20) are through openings.

11. Rapid connection/assembly system, for lift guides, according to claim 1, **characterised** because:
a) each flange (14) forms some machined parts (141) in origin; these machined parts are placed in opposing pairs: one or several pairs are separated between each other by any distance (d₁) the last of these pairs being machined at any distance (d₂) from the end of the guide (1);
b) the upper surface (11) and side surfaces (12) of the head (13) are used as reference to position the open machined parts (141) in origin, whose centres are the connection points (P);
c) there is a connection plate (2) organised into two plate parts (2a) with tightening means (2b) bring them closer together/further apart, to a maximum distance (d₃);
d) there are alignment elements (3) pre-mounted on these plate parts (2a) that can be moved closer, so that for the rapid connection/assembly it is sufficient to position the open machined parts (141) of the guides (1) opposite the alignment elements (3) pre-mounted on the connection plate (2), then compressing the plate parts (2a) of this connection plate (2) when moved closer to.

12. Rapid connection/assembly system, for lift guides, according to claim 11, **characterised** because the plate parts (2a) are solid and the alignment elements (3) are spigots inserted into these plate parts (2a) so that they interrupt the continuity of some longitudinal guides (25) that cover some continuous chamfers (15) that attach to each other the open machined parts (141) of the guides (1) to be connected.

13. Rapid connection/assembly system, for lift guides, according to claims 1 to 4, **characterised** because these alignment elements (241) are die-stamped flanges in the core of these plate parts (2a).

14. Rapid connection/assembly system, for lift guides, according to claim 13, **characterised** because these die-stamped flanges (241) are conformed in the core of the plate parts (2a).

## Patentansprüche

1. Verbindungs/Schnelleinbausystem für Aufzugsführungen, wobei jede Führung (1) aus einem Steg in Pilzform (13) besteht, an dem die obere Bezugsfläche (11) (OX Achse) feinbearbeitet und die seitlichen Bezugsflächen (12) (OY Achse) feinbearbeitet sind und auf jeder Seite ein Flügel (14) angebracht ist. Es kennzeichnet sich **dadurch**, dass:
a) auf jedem Flügel (14) jeder Führung (1) mindestens ein Verbindungspunkt (P) auf einer vorbestimmten festen Höhe hinsichtlich der oberen Bezugsfläche (11) der Pilzform (13), und einen vorbestimmten festen Abstand (a) hinsichtlich der entsprechenden seitlichen Bezugsfläche (12) der Pilzform (13), festgelegt wird;
b) an den Flügeln (14) um jeden Verbindungspunkt (P) herum eine nach außen geöffnete Bearbeitung (141) angeordnet wird;
c) Verbindungsplatten (2), von denen sich jede zwischen den Flügeln (14) auf jeder Seite von mindestens zwei Führungen (1) erstreckt, angeordnet werden, wobei diese Verbindungsplatte (2) aus zwei Plattenteilen (2a) aufgebaut ist, die den Flügeln (14) auf jeder Seite entsprechen und die in Klemmvorrichtungen (2b), (21), (22), die auf diesen Plattenteilen (2a) montiert sind, verschoben werden können, wobei die Klemmvorrichtungen, wenn sie untereinander näher gebracht werden, diese Plattenteile (2a) seitlich gegen die Flügel (14) drücken;
d) auf jedem Plattenteil (2a) Ausrichtungselemente (3), (241) angeordnet werden, die zentriert und koordiniert den Bearbeitungen (141) an den Verbindungspunkten (P) der Flügel (14) entsprechen, so dass alle Verbindungspunkte (P) der Flügel (14) auf jeder Seite der Führungen (1), wenn die Plattenteile (2a) gegen die Flügel (14) gedrückt werden, auf einer geraden Linie (I) stehen.

2. Verbindungs/Schnelleinbausystem für Aufzugsführungen, laut obigem Patentanspruch, das sich **dadurch kennzeichnet, dass**:
a) jeder Flügel (14) vom Ursprung her offene Bearbeitungen (141) bildet, wobei diese Bearbeitungen nach gegenüberliegenden Paaren angeordnet sind: ein Paar oder mehrere Paare sind von einander auf einem beliebigen Abstand (d₁) angeordnet, das letzte der Paare wird auf einem beliebigen Abstand (d₂) vom Ende der Führung bearbeitet (1);
b) die obere Fläche (11) und die seitlichen Flächen (12) der Pilzform (13) als Bezugspunkt dienen, um am Ursprung die offenen Bearbeitungen (141) anzuordnen, wobei deren Mittelpunkte die Verbindungspunkte (P) sind;
c) eine Verbindungsplatte (2), die aus zwei Plattenteilen (2a) aufgebaut ist, mit Klemmvorrichtungen (2b) angeordnet wird, um sie untereinander bis auf einen maximalen Abstand (d₃) anzunähern / zu entfernen, während diese in ihrem Ursprung Versorgungselemente (241) bilden, die zumindest in zwei Paare aufgeteilt und voneinander mit Abstand (d₄) entfernt sind; diese Ausrichtungselemente (241) bilden die Hemmvorrichtungen, die auf der Verbindungsplatte (2) selbst integriert und von ihr abhängig sind und diese fest und solidarisch mit den Flügeln (14) beider zu verbindender Führungen (1) in Verbindung bringen; so dass für die Verbindung / den Schnelleinbau nur die Bearbeitungen (141), (241) der Führungen (1) gegenüber gesetzt und die Teile /Längsteile (2a) dieser Verbindungsplatte (2) näher zusammengedrückt werden müssen.

3. Verbindungs/Schnelleinbausystem für Aufzugsführungen, laut Patentanspruch 2, das sich **dadurch kennzeichnet, dass** die Ausrichtungselemente (241) mindestens in vier Paare, die untereinander in Zweiergruppen auf einem Abstand (d₅) stehen, aufgeteilt werden.

4. Verbindungs/Schnelleinbausystem für Aufzugsführungen, laut Patentansprüchen 2 und 3, das sich **dadurch kennzeichnet, dass** im Zusammenhang mit den Abständen (d₁), (d₂), (d₄), (d₅) folgende Bedingungen erfüllt werden müssen:
d₄ = 2d₂ und d₅ = d₁

5. Verbindungs/Schnelleinbausystem für Aufzugsführungen, laut obiger Patentansprüche, das sich **dadurch kennzeichnet, dass** jedes Plattenteil (2a) ein verlängertes U-Profil mit asymmetrischen Flügeln, von denen einer nach innen abgewinkelt ist, und gegenüberliegenden Formpaaren (20), ist, um die Klemmvorrichtungen (2b) aufzunehmen.

6. Verbindungs/Schnelleinbausystem für Aufzugsführungen, laut Patentanspruch 5, das sich **dadurch kennzeichnet, dass** die besagten Ausrichtungselemente (241), welche die auf der Grundplatte (2) integrierten und davon abhängigen Hemmvorrichtungen bilden, Erhebungen sind, die mit den offenen und an der Abwinklung an einem der asymmetrischen Flügel dieser Plattenteile (2a) ausgeformten Bearbeitungen (141) von ihrer Abmessung her übereinstimmen.

7. Verbindungs/Schnelleinbausystem für Aufzugsführungen, laut obiger Patentansprüche, das sich **dadurch kennzeichnet, dass** die besagten Klemmvorrichtungen (2b) Sätze aus Stehbolzen (21) und Mutter (22) sind, die in gegenüberliegenden Formsätzen (20) auf den Plattenteilen (2a) angeordnet sind, so dass der maximale Abstand (d₃) zwischen beiden Plattenteilen (2a) jeweils durch die Mutter (22) und den Kopf (21 b) des Stehbolzens (21) begrenzt ist.

8. Verbindungs/Schnelleinbausystem für Aufzugsführungen, laut Patentanspruch 5, das sich **dadurch kennzeichnet, dass** diese Formgebungen (20) in jedem Satz aus einer drehsicheren Bohrung (20a) und einer offenen Tasche (20b) bestehen.

9. Verbindungs/Schnelleinbausystem für Aufzugsführungen, laut Patentansprüchen 1 bis 4, das sich **dadurch kennzeichnet, dass** die Plattenteile (2a) massiv sind, mit einer verlängerten Wand, an deren Ende die Ausrichtungselemente (241) abgewinkelt angeordnet werden.

10. Verbindungs/Schnelleinbausystem für Aufzugsführungen, laut Patentanspruch 9, das sich **dadurch kennzeichnet, dass** diese Formgebungen (20) Durchgangsbohrungen sind.

11. Verbindungs/Schnelleinbausystem für Aufzugsführungen, laut Patentanspruch 1, das sich **dadurch kennzeichnet, dass**:
a) jeder Flügel (14) vom Ursprung her Bearbeitungen (141) bildet, wobei diese Bearbeitungen nach gegenüberliegenden Paaren angeordnet sind: ein Paar oder mehrere Paare sind voneinander auf einem beliebigen Abstand (d₁) angeordnet, das letzte der Paare wird auf einem beliebigen Abstand (d₂) vom Ende der Führung bearbeitet (1);
b) die obere Fläche (11) und die seitlichen Flächen (12) der Pilzform (13) als Bezugspunkt dienen, um am Ursprung die offenen Bearbeitungen (141) anzuordnen, wobei deren Mittelpunkte die Verbindungspunkte (P) sind;
c) eine aus zwei Plattenteilen (2a) aufgebaute Verbindungsplatte (2) mit Klemmvorrichtungen (2b) angeordnet wird, um sie untereinander bis auf einen maximalen Abstand (d₃) anzunähern/ zu entfernen;
d) Vormontierte Ausrichtungselemente (3) in diese verschiebbaren Plattenteile angeordnet werden, so dass für die Verbindung / den Schnelleinbau nur die offenen Bearbeitungen (141) der Führungen (141) mit den in der Verbindungsplatte (2) vormontierten Ausrichtungselementen (3) gegenüber gesetzt und die Plattenteile (2a) dieser Verbindungsplatte (2) näher zusammengedrückt werden müssen.

12. Verbindungs/Schnelleinbausystem für Aufzugsführungen, laut Patentanspruch 11, das sich **dadurch kennzeichnet, dass** die Plattenteile (2a) massiv und die Ausrichtungselemente (3) in diese Plattenteile (2a) eingefügte Stifte sind, und somit die Kontinuität der Längsführungen (25) unterbrechen, welche durchgehende Kantenbrüche (15), die die offenen Bearbeitungen (141) der zu verbindenden Führungen (1) untereinander verbinden, umfassen.

13. Verbindungs/Schnelleinbausystem für Aufzugsführungen, laut Patentansprüchen 1 bis 4, das sich **dadurch kennzeichnet, dass** die besagten Ausrichtungselemente (241) Vorstöße sind, die auf den Steg dieser Plattenteile (2a) geprägt sind.

14. Verbindungs/Schnelleinbausystem für Aufzugsführungen, laut Patentanspruch 13, das sich **dadurch kennzeichnet, dass** die besagten geprägten Vorstöße (241) am Steg der Plattenteile (2a) ausgebildet sind.
